# EUROPEAN PATENT SPECIFICATION

(11) **EP 4 474 131 B1**
(45) Date of publication and mention of the grant of the patent: **04.06.2025**
(21) Application number: 24180088.7
(22) Date of filing: 05.06.2024
(51) Int. Cl.: B29C 48/17, B29C 48/21, B29C 48/49, B29C 48/12, B29C 48/90, B29C 43/22, B29C 44/46, B29C 48/154

(54) **A METHOD FOR CO-EXTRUSION OF A PROFILE ELEMENT**
VERFAHREN ZUR KOEXTRUSION EINES PROFILELEMENTS
PROCÉDÉ DE COEXTRUSION D'UN ÉLÉMENT PROFILÉ

(30) Priority: 06.06.2023 EE 202300013
(43) Date of publication of application: 11.12.2024
(73) Proprietor: Tiree OÜ, 64405 Jaanikeste küla (EE)
(72) Inventor: Rannu, Ilo, 75417 Mõisaküla (EE)
(74) Representative: AAA Patendibüroo OÜ

(56) References cited:
- EP-A1- 3 915 760
- CA-A1- 2 258 441
- CN-B- 105 860 318
- US-A1- 2021 046 688
- US-B1- 6 659 020
- US-B2- 9 566 736

## Description

### TECHNICAL FIELD

The present invention relates to the field of plastic industry, more specifically, the invention relates to the method for co-extrusion of a profile element, where the core of the profile element is made of recycled plastic and the core of the profile element has a plastic coating, and the profile element is manufactured with continuous co-extrusion.

### BACKGROUND ART

United States patent application US2016082706A1 (published 24 March 2016) discloses a method for co-extrusion, using sophisticated double-worm extruder for co-extrusion, which are used for producing a coating on the extruded core.

International patent application WO03095537A1 (published 20 November 2003) discloses a method for producing a profile element of thermoplastic plastic material, where during co-extrusion the core is coated with a coating, fed into the co-extrusion head from the second extruder. This document does not describe the process of calibration and stabilization of the shape and dimensions of the profile element.

The two documents referred above do not describe the process of calibration and stabilization of the shape and dimensions of the profile element, and if the described method is applicable for producing a profile element of recycled plastic.

Estonian patent application EE202000009A (published 15 July 2020), also published as European patent application EP3915760A1 (published 1 December 2021), discloses a system of calibration dies (matrices) for extruding plastic profile of recycled plastic. Apart from co-extrusion, which is not described in the solution disclosed in EE202000009A, the line for extruding the core of a profile element described in the mentioned patent application is substantially similar to the line used for co-extrusion in the present invention - in the system described in EE202000009A a profile element is extruded without a coating.

Canadian patent application CA2258441A1 (published 14 July 1999) discloses a method and apparatus for co-extruding a primary, substrate material and at least one secondary material to produce a multi-component product, by preparing primary and secondary extrudates and feeding them together through an extrusion die via a co-extrusion adapter.

The secondary extrudate flows in a direction perpendicular, or substantially perpendicular, to the direction of flow of the primary extrudate at the point where the two extrudates meet within the co-extrusion adapter.

United States patent application US2021046688A1 (published 18 February 2021) discloses a wood-plastic-compound (WPC) extrusion profile comprising a WPC material, in which plant fibres are embedded in a plastic matrix.

The WPC material has a content of naturally growing plant fibres, and the WPC extrusion profile includes at least one foam-filled hollow chamber.

The at least one hollow chamber of the WPC extrusion profile is completely filled up with a foam, in particular a closed-pore foam. The foam includes or consists of a plastic material of the same type of plastic as the matrix of the WPC material.

The foaming is effected by using a physically acting blowing agent, in particular CO₂.

United States patent US6659020B1 (published 9 December 2009) discloses an apparatus and method of producing an elongate calibrated extrusion of a formable material.

The formable material most suitably comprises a thermoplastics polymer having an outer skin and a foamed core. It may be formed using an extrusion apparatus having an extruder and a co-extrusion die which delivers the extrudate between opposed sizing conveyors.

These travel at a speed suitable to allow them to continuously take up the flowable extrudate. The flowable extrudate is caused to adhere sufficiently to the surface of the sizing conveyers in order to cause the extrudate to maintain its shape.

The extrudate is detached from the recirculating sizing conveyors after it has solidified sufficiently to exhibit the desire dimensional accuracy.

Chinese patent application CN105860318A (published 17 August 2016) discloses a co-extruded double-foaming polymer composite material floor and a processing method thereof. The floor comprises a surface layer and a core layer.

The surface layer is on the upper surface and the upper half parts of two sides of the core layer. The surface layer is a foaming surface layer and the core layer is a foaming core layer.

United States patent US9566736B2 (published 14 February 2017), also published as European patent EP2937199B1, discloses a system and method for producing plastic products from a recycled plastic mix of unidentified, unclean and unsorted mixed plastic waste.

The method comprises the thermal and mechanical processing of the recycled plastic waste using continuous extrusion foaming, two-phase cooling, continuous metering of the pulling strength and automatic adjustment of the pulling speed and extrusion speed.

None of these cited documents provides a solution which enables to mimic darker areas and stripes on the profile element being extruded in longitudinal direction, which together with the imitation of wood pattern applied on the profile element with the pattern pressing unit (i.e. relief pattern) creates impression of the variation of colour characteristic to wood.

The described line comprises (main) extruder, extrusion head, system of calibration dies comprising calibration dies (matrices) following the extrusion head for stabilizing the shape and dimensions of the profile element and cooling the profile element, pulling unit of profile element and cutting unit of profile element. In this system, the inner surface of the inner chamber of the calibration dies matching the shape of the profile to be extruded is coated with anti-friction coating. This line further includes cooling baths for post-cooling, through which the profile element exiting from the system of calibration dies is pulled with the pulling unit.

A problem related to the production of profile elements of recycled plastic is ensuring stability of their dimensions and shape, because generally it is not precisely known, which additives are included in the recycled plastic.

When using recycled plastic for making profile elements with relatively flat cross section, such as board profiles, e.g. terrace boards, fence boards and other similar profiles, it shall be ensured during continuous extrusion that plastic would not shrink in the course of hardening and would thus not cause depressions or voids in the extruded profile element, especially in its external surface.

Generally in case of co-extrusion methods, where the plastic of the core of the profile element is coated with plastic coating, water is fed between the profile element being produced in the profile cavity of calibration dies and the surface of profile cavity in the system of calibration dies, in order to ensure sliding, and the plastic of the coating is held with vacuum against the surface of inner chamber (i.e. profile cavity) of the calibration dies, to prevent formation of depressions or other defects on the surface of the profile element during shrinkage of the core material.

This means that calibration dies have complex construction and are difficult to produce, because additional channels must be made in the calibration dies for generating vacuum.

In the existing methods, usually the whole profile element being manufactured is pulled through the system of calibration dies with a pulling unit, which causes the need for ensuring mutual balance between the exiting speed of molten plastic exiting from the extruder and the pulling speed of the pulling unit.

The main objective of the present invention is to provide a method preventing the shortages of the methods of the prior art.

### SUMMARY OF THE INVENTION

Although all used abbreviations are standard and have been used for a long time in relevant field, for the sake of clarity it should be noted that the following abbreviations denote the following plastics:
PP - polypropylene;
ABS - acrylonitrile butadiene styrene;
PS - polystyrene;
PE - polyethylene;
HDPE - high density polyethylene;
MDPE - medium density polyethylene;
LDPE - low-density polyethylene;
LLDPE - linear low-density polyethylene;
PET - polyethylene terephthalate;
TPV - thermoplastic vulcanizate;
TPU - thermoplastic polyurethane.

The present invention provides a method for co-extrusion of a profile element, where the core of the profile element is made of recycled plastic and the core of the profile element has a plastic coating.

According to the invention, the profile element is extruded in a co-extrusion line comprising:
main extruder for extruding the core of the profile element,
at least one second extruder for extruding the coating on the core of the profile element,
co-extrusion head comprising core plastic equalizing zone, application zone of coating on the core, initial formation zone of profile of the profile element, and pressurizing zone of the core of the profile element,
system of calibration dies comprising calibration dies following the co-extrusion head for stabilizing the shape and dimensions of the profile element and cooling the profile element,
pulling unit of profile element and cutting unit of profile element,

The method of the invention comprises steps, where:
recycled plastic in molten state is fed from the main extruder into the co-extrusion head for forming the core of the profile element, and plastic of the coating in molten state is fed from at least one second extruder into the co-extrusion head for forming coating on the core of the profile element,
wherein the core plastic of the profile element coated with the coating is extruded from the co-extrusion head to the system of calibration dies following the co-extrusion head, where the core of the profile element and the coating are cooled down for curing the plastic, and where the external dimensions and shape of the profile element are calibrated upon passing through the system of calibration dies,
where the profile element is pulled by the pulling unit through the system of calibration dies, and in the cutting unit the profile element subjected to continuous extrusion is cut to specified lengths.

The profile element extruded in the system of calibration dies is rapidly cooled down so that, at most, in the first two calibration dies the plastic of the core is pressurized by the pressure exerted by the extruder to the plastic of the core, in order to press the coating of the profile element against the inner surface of the inner chamber (or profile cavity) of the said calibration dies.

The profile element is pulled through the following calibration dies of the system of calibration dies by the pulling unit, wherein simultaneously with passing through the calibration dies, the coating of the profile element is pressed against the inner surface of the inner chamber (or profile cavity) of the calibration dies with the gas generated by the reaction of the blowing agent contained in the plastic of the core.

This enables the system of the invention to omit the vacuum system for sucking the coating material against the inner surface in the profile cavity of the calibration dies.

The profile element being extruded is rapidly cooled down in the calibration dies, so that the main extruder holds post-pressure only at most in the first two calibration dies after the co-extrusion head.

The extruded profile element is pressed from the co-extrusion head directly into the system of calibration dies, i.e. there is no air gap between the co-extrusion head and the system of calibration dies, but calibration die is connected directly to the co-extrusion head through heat resistant thermal insulation plate.

In the following calibration dies, the plastic of the coating as well as the plastic of the core has been sufficiently cured, but the inner pressure created in the plastic of the core does not allow generation of depressions in the coating, as the inner pressure holds the coating against the inner surface of the inner chamber of the calibration dies.

When exiting from the calibration dies, the plastic of the core as well as the plastic of the coating has been cooled down and cured, preventing the risk of generation of depressions.

In the method of the invention, the core is made of recycled plastic, which is a single-type plastic or a composite multi-type plastic (plastic mix), where the mentioned plastics comprise respectively one or more following plastics, which are LDPE, LLDPE, MDPE, HDPE, PP, PS, ABS, or any other polyolefin-based plastic or their combination.

In the method of the invention, the plastic of the coating comprises fire resistance additives, anti-flammability additives, colorant, UV-stabilizing additives, additives improving adhesion or surface strength, or their combination.

When co-extruding the coating on the core, it is not necessary to mix additives into the material of the core for providing suitable colour and e.g. fire-resistant characteristics and UV resistance to the profile being extruded, but only into the material of the coating. This enables to save colorant and other additives mixed into the plastic.

Furthermore, also completely pure plastic or recycled plastic containing a small amount of foreign substances can be used as coating material.

It is also easier to ensure surface quality and suitable colour of the profile element.

In the method of the invention, the inner surface of the inner chamber of the calibration dies matching the shape of the profile being extruded is coated with anti-friction coating. This enables the system of the invention to omit spraying water in the calibration dies into the profile cavity, between its inner surface and the profile being extruded.

In a further embodiment of the method of the invention, two or more second extruders are used for providing two or more different colours to the coating on different sides of the profile element or for coating with different types of plastic.

This enables e.g. during the production of a terrace board profile to apply a coating on the walkable work surface, which is especially resistant to mechanical wear, and a coating of less resistant plastic on the back side of the profile.

In the second embodiment of the method of the invention, after the system of calibration dies the profile element is fed through at least one cooling bath for post-cooling. Post-cooling is necessary in a situation, where the profile element has not cooled down sufficiently upon exit from the system of calibration dies due to the extrusion speed of the profile element and/or thickness of the profile.

In the third embodiment of the method of the invention, a pattern is created on the profile element with pattern pressing unit or the profile element is brushed, or both, before the pulling unit.

With the pattern pressing unit (e.g. profile rolls), e.g. wood pattern is created on the profile of a terrace board or a weatherboard.

Brushing is necessary for creating a mat external surface.

In the fourth embodiment of the method of the invention, a pattern is created on the profile element with pattern pressing unit between two calibration dies.

According to the method of the invention, HDPE is used as the coating material, into which PET granules with higher melting point have been mixed. Temperatures are set so that PET granules melt after the coating extruder, i.e. the duct connecting the extruder and the moulding head and/or in the co-extrusion head. This is necessary for ensuring that the extruder does not mix the material mass to be extruded on the product with colour, but the colour in PET material will be released either in the duct connecting the extruder and the co-extrusion head or only in the co-extrusion head. In other words, the material of PET granules does not mix completely uniformly with the coating material - this enables to mimic darker areas and stripes on the profile element being extruded in longitudinal direction, which together with the imitation of wood pattern applied on the profile element with the pattern pressing unit (i.e. relief pattern) creates impression of the variation of colour characteristic to wood.

### BRIEF DESCRIPTION OF DRAWINGS

The invention is described below with reference to the appended schematic figures, where:
Figure 1 is a cross-sectional view of an example embodiment of a profile element extruded with the method of the invention;
Figure 2 is a view of the surface of a profile element, on which a surface pattern with imitation of wood pattern has been formed;
Figure 3 is a top view of a co-extrusion line for performing the method of the invention;
Figure 4 is a side view of the line of Figure 3;
Figure 5 is a side view of the line of Figures 3 and 4, including the pattern pressing unit;
Figure 6 is an enlarged point view of the co-extrusion head located between the extruder and the system of calibration dies with its various zones;
Figure 7 is a sectional view of the co-extrusion head along the line A - A on Figure 6.

### EXAMPLE OF AN EMBODIMENT

For the sake of clarity, similar details and elements on different figures have the same reference numbers.

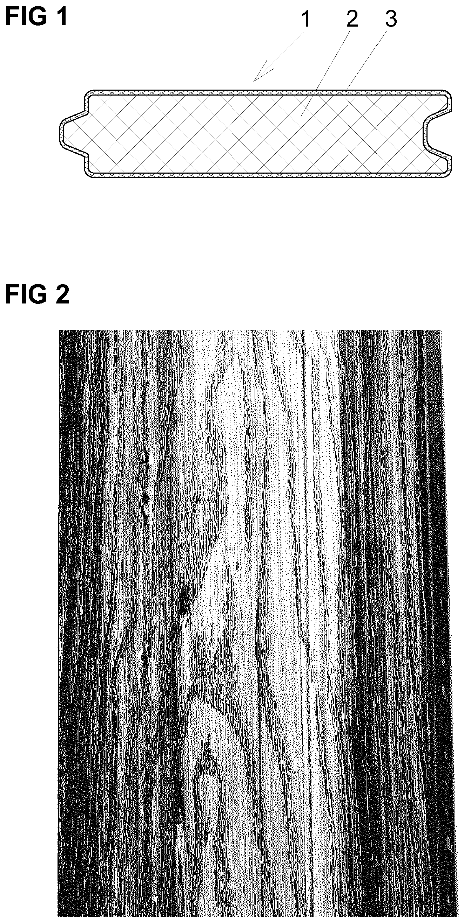

The profile element 1 shown in Figure 1, comprising of the core 2 and the coating 2, is co-extruded with the method of the invention. In the example embodiment illustrated in Figure 1, the profile element 1 is a matchboard profile. Figure 2 shows also a possible imitation of wood pattern, which can be pressed on the profile element 1 being extruded in the course of manufacturing, if necessary.

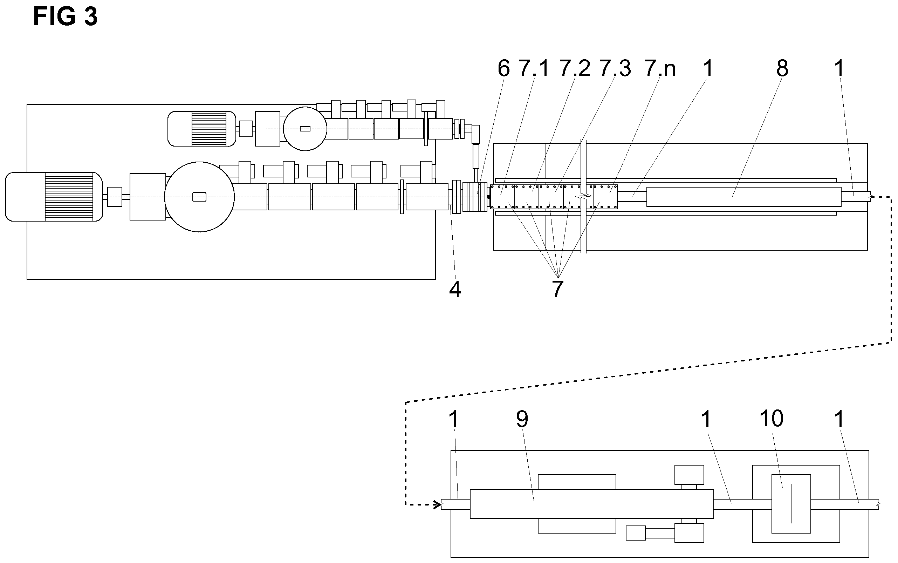

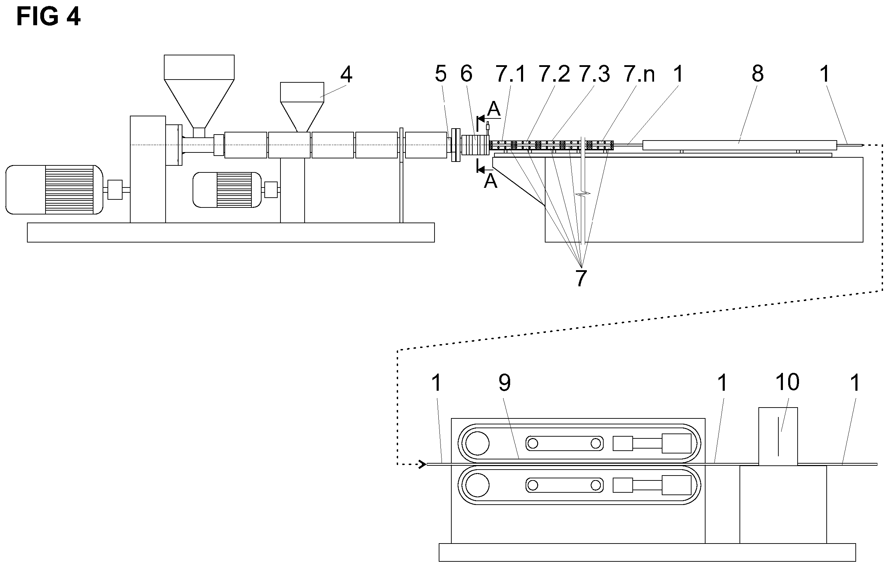

The example co-extrusion line shown in Figures 3 and 4 is used for performing the method of the invention. The line has the main extruder 4 for extruding the core 2 of the profile element 1 and the second extruder 5 for extruding the coating 3 on the core 2 of the profile element 1.

Molten plastic is fed from the mentioned extruders 4 and 5 to the co-extrusion head 6.

For example, when the opposite sides of the profile element 1 with flat cross section shown in Figure 1 are coated with the coating 3 of different colour and/or different plastic, the line has one additional extruder in addition to the two above mentioned extruders 4 and 5 (not shown).

The co-extrusion head 6 is followed by the system of calibration dies 7 comprising calibration dies 7.1 to 7.n for stabilizing the shape and dimensions of the profile element 1 and cooling the profile element.

In the embodiment of the line shown in the figures, the system of calibration dies 7 is followed by a cooling bath 8 for post-cooling of the profile element 1. Next, the line includes the pulling unit 9 of the profile element 1, followed by the cutting unit 10 for cutting the profile element 1 to specified lengths. For the sake of clarity, it must be noted that all mentioned units 6, 7, 8, 9 and 10 are located sequentially in-line in the longitudinal direction of the profile element.

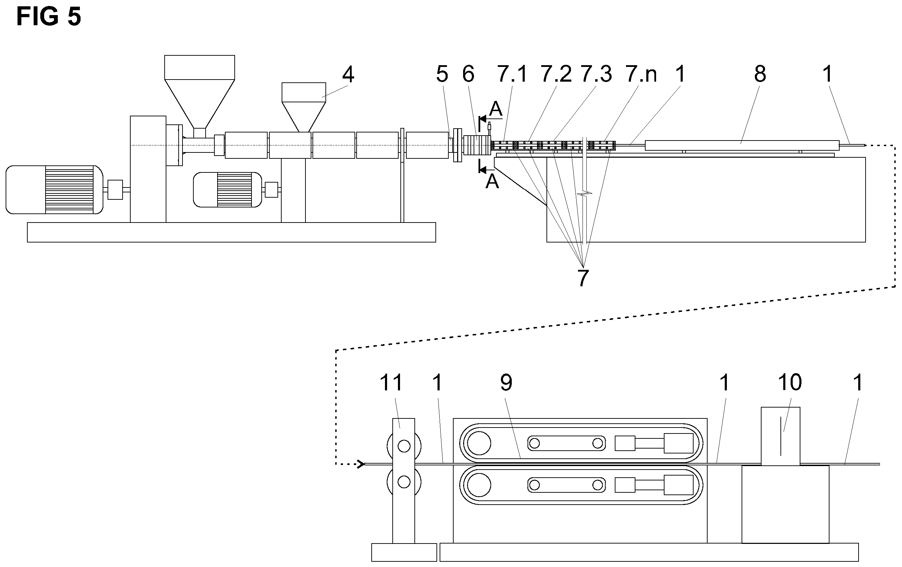

When a pattern is created on the profile element being extruded, e.g. wood imitation or any other pattern, a pattern pressing unit 11 (e.g. profile/pattern rolls) is located in the line generally before the pulling unit 9, as shown in Figure 5. However, it can be optionally located between the calibration dies. Example of the pattern is shown in Figure 2.

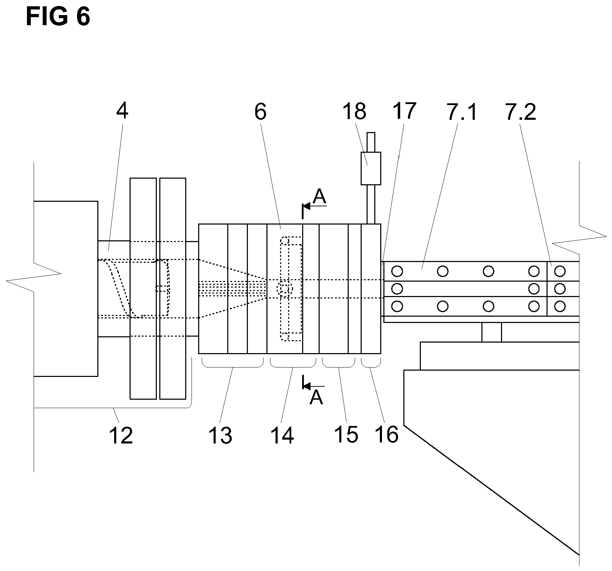

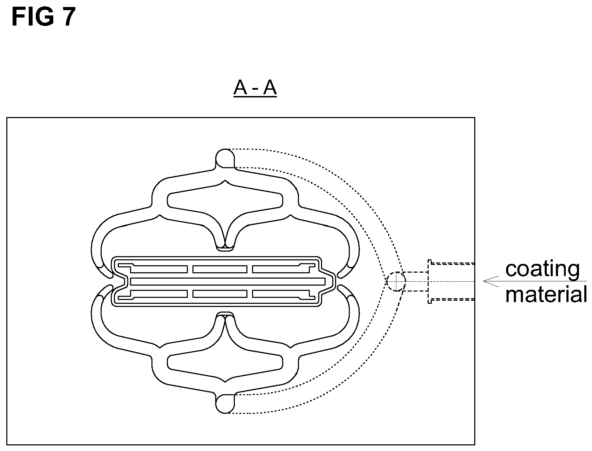

Molten plastic is pressed from the plastic melting zone 12 of the main extruder 4 into the co-extrusion head 6 (see Figure 6), first into the molten plastic equalizing zone 13, and further into the application zone 14 of coating 3, where molten plastic of the coating 3 is pressed into the co-extrusion head from the second extruder 5, which is distributed around the core 2 through channels in the mentioned zone. Example illustration of the said channels is provided in section A - A in Figure 7. The section has been made from the application zone 14 of coating 3 of the co-extrusion head 6, shown in Figures 4, 5 and 6.

Thereafter, the core 2 surrounded with the coating 3 is pressed into the initial formation zone of the profile shape 16, the profile of which corresponds to the profile of the profile element 1 being manufactured.

As seen from the enlarged point view in Figure 6, a heat resistant thermal insulation plate 17 is located between the co-extrusion head 6 and the first calibration die 7.1 of the system of calibration dies 7, i.e. there is no air gap between the co-extrusion head 6 and the system of calibration dies 7. Molten core 2 together with the surrounding coating 2 is pressed under the pressure generated by the extruders from the co-extrusion head 6 into the calibration die 7.1, where rapid cooling of the plastic material takes place. Cooling continues in the following calibration dies 7.2, 7.3...7.n.

The pressure exerted to the plastic of the core 2 generated by the extruder also holds the plastic of the coating 3 against the inner surface of the inner chamber of the calibration dies 7.1 and 7.2, the cross section of which matches the profile of the profile element 1 being extruded and which is coated with anti-friction coating.

In the method of the invention, the cooling capacity is dimensioned so that upon exit from the calibration die 7.2 to the next calibration die 7.3, the plastic of the core 2 as well as the plastic of the coating 3 has already cured.

Therefore, in the following calibration dies 7.3 to 7.n, the core 2 generates pressure for pressing the coating 3 against the inner surface of the inner chamber of the calibration dies 7.3 to 7.n with the gas generated by the reaction of the blowing agent contained in the plastic of the core 2.

A chemical blowing agent (thermal decomposable foaming agent) is a chemical additive that is able to evolve gas through thermal decomposition. Chemical foaming agents generally are low-molecular-weight inorganic or organic compounds and are usually supplied in powder or pellet form. Examples of inorganic chemical foaming agents include sodium bicarbonate, ammonium carbonate, ammonium bicarbonate, and calcium azide. Examples of organic foaming agents include azodicarbonamide, hydrazocarbonamide, benzenesulfonyl hydrazide, dinitrosopentamethylene tetramine, toluenesulfonyl hydrazide, p,p'-oxybis(benzenesulfonylhydrazide), azobisisobutyronitrile, and barium azodicarboxylate. An example of such blowing agent is a LUVOBATCH^{®} PW BA 9544 blowing agent from company Lehmann & Voss.

The profile element 1 is pulled through the calibration dies 7.3 to 7.n with the pulling unit 9.

Such method enables to omit the common vacuum system in the calibration dies, which is used in many solutions of prior art for sucking and holding the coating 3 against the inner surface of the inner chamber of the calibration dies 7.3 to 7.n.

It also enables to coat easily the inner surface of the inner chamber of the calibration dies with anti-friction coating, which simultaneously protects the inner surface against damages and enables to pull the profile element being extruded more easily through the calibration dies.

### CO-EXTRUSION EXAMPLE 1

The product being manufactured is a profile element with single-colour coating, with dimensions 147 mm × 27 mm, average thickness of coating 2 mm.

Material of the coating is HDPE and material of the core is recycled mixed plastic, which mainly contains all or some of the following: LDPE, HDPE, MDPE, PP, PS and ABS.

Temperature values are average - they may vary ±20%.

Temperatures of the main extruder (Figure 3) counted from the filling hopper of material towards discharge end of the extruder:

| | |
|---|---|
| first heating zone: | 175°C |
| second heating zone: | 175°C |
| third heating zone: | 180°C |
| fourth heating zone: | 190°C |
| fifth heating zone: | 200°C |
| sixth heating zone before the co-extrusion head: | 210°C |

Rotation speed of the worm of the main extruder: 17 rotations per minute (rpm)

The temperature in the co-extrusion head is 210°C.

Temperatures of the second extruder (Figure 3) counted from the filling hopper of material towards discharge end of the extruder:

| | |
|---|---|
| first heating zone: | 175°C |
| second heating zone: | 175°C |
| third heating zone: | 180°C |
| fourth heating zone: | 190°C |
| fifth heating zone: | 210°C |
| sixth heating zone before the co-extrusion head: | 230°C |

Rotation speed of the worm of the second extruder: 19 rotations per minute (rpm)

Pulling speed of the pulling unit 35.2 cm/min.

First cooling in the system of calibration dies 7 takes place at the temperatures -3 to - 6°C.

Cooling water temperature in the cooling bath is 6 to 10°C.

### CO-EXTRUSION EXAMPLE 2

The product being manufactured is a profile element with single-colour coating, with dimensions 147 mm × 27 mm, average thickness of coating 2 mm, with colour spots and stripes darker than the remaining colour of the coating and imitation of wood texture created in the coating.

Material of the coating is HDPE, into which PET with higher melting point has been mixed.

Material of the core is recycled mixed plastic, which mainly contains all or some of the following: LDPE, HDPE, MDPE, PP, PS and ABS.

Temperature values are average - they may vary ±20%.

Temperatures of the main extruder (Figure 3) counted from the filling hopper of material towards discharge end of the extruder:

| | |
|---|---|
| first heating zone: | 175°C |
| second heating zone: | 175°C |
| third heating zone: | 175°C |
| fourth heating zone: | 200°C |
| fifth heating zone: | 220°C |
| sixth heating zone before the co-extrusion head: | 230°C |

Rotation speed of the worm of the main extruder: 17 rotations per minute (rpm)

The temperature in the co-extrusion head is 240°C.

Temperatures of the second extruder (Figure 3) counted from the filling hopper of material towards discharge end of the extruder:

| | |
|---|---|
| first heating zone: | 180°C |
| second heating zone: | 180°C |
| third heating zone: | 180°C |
| fourth heating zone: | 190°C |
| fifth heating zone: | 220°C |
| sixth heating zone before the co-extrusion head: | 260°C |

Rotation speed of the worm of the second extruder: 19 rotations per minute (rpm)

Pressures are in the range of 1-3.5 bar.

Pulling speed of the pulling unit 35.2 cm/min.

First cooling in the system of calibration dies 7 takes place at the temperatures -3 to - 6°C.

Cooling water temperature in the cooling bath is 6 to 10°C.

In this embodiment, the coating material being applied is melted, mixed and coloured, and later after the extruder in the co-extrusion head, where mixing no longer takes place, PET granules with higher melting point will melt, not tinting the whole mass of the surface coating material, but creating colour spots and/or stripes on the surface of the product.

Together with wood pattern created with the profile rolls of the pattern pressing unit before the pulling unit, these random spots and stripes leave the impression that the profile element includes darker and lighter areas similar to natural wood. An example of such profile element with wood imitation is provided in Figure 2.

Different plastic blends can be used as coating material, which are specially developed for the conditions, where the product is intended to be used: such plastic blends include blends with higher wear resistance, fire resistance, lower flammability, higher flexural strength, etc.

Such plastic materials are e.g. special plastic blends Surlyn^{™} 8940 and Surlyn^{™} 8920 manufactured by Dow^{®} Group, but they are manufactured worldwide also by many other manufacturers and possess very different qualities.

In the example embodiments of the present invention, single-worm extruders have been used, as these enable economically the most feasible embodiment, but for the embodiments of the present invention, also double-worm extruders can be used for more uniform mixing and foaming of plastic material.

Such system of calibration dies enables forming of materials with different and changing melting temperatures and liquidity index with extrusion method. Furthermore, the use of such system of calibration dies enables rapid cooling of material for retaining the shape of the profile element. With water vacuum moulds known from the prior art, it is extremely difficult, if not impossible, to retail the shale of the product in case of such material blend - the product changes shape, i.e. collapses before cooling down sufficiently, and adheres to the mould surfaces.

### LIST OF REFERENCE NUMBERS

- 1: profile element
- 2: core
- 3: coating
- 4: main extruder
- 5: second extruder for generating the coating
- 6: co-extrusion head
- 7: system of calibration dies
- 7.1...7.n: calibration dies (matrices)
- 8: cooling bath
- 9: pulling unit
- 10: cutting unit
- 11: pattern pressing unit
- 12: plastic melting zone
- 13: molten plastic equalizing zone
- 14: application zone of coating
- 15: initial formation zone of the profile shape
- 16: pressurizing zone of the core
- 17: heat resistant thermal insulation plate
- 18: pressure sensor

## Claims

1. A method for co-extrusion of a profile element (1), where a core (2) of the profile element (1) is made of a recycled plastic and the core (2) of the profile element (1) has a plastic coating (3),
where the profile element (1) is extruded in a co-extrusion line comprising:
a main extruder (5) for extruding the core (2) of the profile element (1),
at least one second extruder (5) for extruding the coating (3) of the core (2) of the profile element (1),
a co-extrusion head (6) comprising core (2) a plastic equalizing zone (13), an application zone of coating (14) on the core (2), an initial formation zone of the profile shape (15) of the profile element (1) and a pressurizing zone (16) of the core (2) of the profile element (1),
a system of calibration dies (7) comprising calibration dies (7.1...7.n) following the co-extrusion head (6) for stabilizing the shape and dimensions of the profile element (1) and cooling the profile element (1),
a pulling unit (9) of the profile element (1) and a cutting unit (10) of profile element (1),
where the method comprising steps, where:
recycled plastic in molten state is fed from the main extruder (4) into the co-extrusion head (6) for forming the core (2) of the profile element (1), and plastic of the coating (3) in molten state is fed from at least one second extruder (5) into the co-extrusion head (6) for forming coating (3) on the core (2) of the profile element (1),
wherein the plastic core (2) of the profile element coated with the coating (3) is extruded from the co-extrusion head (6) to the system of the calibration dies (7) following the co-extrusion head (6), where the core (2) of the profile element (1) and the coating (3) are cooled down for curing the plastic, and wherein the external dimensions and shape of the profile element (1) are calibrated upon passing through the system of calibration dies (7),
where the profile element (1) is pulled by the pulling unit (9) through the system of calibration dies (7), and in the cutting unit (10) the profile element (1) subjected to continuous extrusion is cut to specified lengths,
the profile element (1) is pressed from the co-extrusion head (6) directly into the system of calibration dies (7),
where the profile element (1) being extruded is rapidly cooled down so that, at most, in the first two calibration dies (7.1, 7.2) the plastic of the core (2) is pressurized by the pressure exerted by the extruder (4) to the molten plastic of the core (2), in order to press the coating (3) of the profile element (1) against the inner surface of the inner chamber of the said calibration dies (7.1, 7.2), and
the profile element (1) is pulled through the following calibration dies (7.3 ...7.n) of the system of calibration dies (7) by the pulling unit (9), and
simultaneously with passing through the calibration dies (7.3...7.n), the coating (3) of the profile element (1) is pressed against the inner surface of the inner chamber of the calibration dies (7.3...7.n) with the gas generated by the reaction of the blowing agent contained in the plastic of the core (2),
**characterized in that** the material of the coating (3) is HDPE, into which PET with higher melting point has been mixed.

2. The method of claim 1, **characterized in that** the core (2) is made of recycled plastic, which is a single-type plastic or a composite multi-type plastic, where said plastic comprising respectively one or more of the following plastics, which are LDPE, LLDPE, MDPE, HDPE, PP, PS, ABS, or any other polyolefin-based plastic or their combination.

3. The method of any of the preceding claims, **characterized in that** the plastic of the coating (3) comprises fire resistance additives, anti-flammability additives, colorant, UV-stabilizing additives, additives improving adhesion or surface strength, or their combination.

4. The method of any of the preceding claims, **characterized in that** the inner surface of the inner chamber of the calibration dies (7.1 ... 7.n) matching the shape of the profile being extruded is coated with anti-friction coating.

5. The method of any of the preceding claims, **characterized in that** two or more second extruders (5) are used for providing two or more different colours to the coating (3) on different sides of the profile element (1) or for coating with different types of plastic.

6. The method of any of the preceding claims, **characterized in that** after the system of calibration dies (7) the profile element (1) is fed through at least one cooling bath (8) for post-cooling.

7. The method of any of the preceding claims, **characterized in that** before the pulling unit (9), a pattern is created on the profile element (1) with a pattern pressing unit (11), the profile element (1) is brushed, or both.

8. The method of any of the preceding claims 1 to 5, **characterized in that** a pattern is created on the profile element with a pattern pressing unit (11) between two calibration dies.

## Patentansprüche

1. Verfahren zur Koextrusion eines Profilelements (1), wobei ein Kern (2) des Profilelements (1) aus einem Recyclingkunststoff gefertigt ist und der Kern (2) des Profilelements (1) eine Kunststoffbeschichtung (3) aufweist,
wobei das Profilelement (1) in einer Koextrusionslinie extrudiert wird, die umfasst:
einen Hauptextruder (5) zum Extrudieren des Kerns (2) des Profilelements (1),
mindestens einen zweiten Extruder (5) zum Extrudieren der Beschichtung (3) des Kerns (2) des Profilelements (1),
einen Koextrusionskopf (6), der einen Kern (2), eine plastische Ausgleichszone (13), eine Auftragszone (14) der Beschichtung auf den Kern (2), eine anfängliche Profilgestalt-Bildungszone (15) des Profilelements (1) und eine Druckbeaufschlagungszone (16) des Kerns (2) des Profilelements (1) umfasst,
ein System aus Kalibriermatrizen (7), das Kalibriermatrizen (7.1...7.n) umfasst, die dem Koextrusionskopf (6) folgen, um die Gestalt und Abmessungen des Profilelements (1) zu stabilisieren und das Profilelement (1) zu kühlen,
eine Zieheinheit (9) des Profilelements (1) und eine Schneideinheit (10) des Profilelements (1),
wobei das Verfahren Schritte umfasst, bei denen:
recycelter Kunststoff im geschmolzenen Zustand von dem Hauptextruder (4) in den Koextrusionskopf (6) zum Bilden des Kerns (2) des Profilelements (1) eingespeist wird, und Kunststoff der Beschichtung (3) im geschmolzenen Zustand von mindestens einem zweiten Extruder (5) zum Bilden einer Beschichtung (3) auf dem Kern (2) des Profilelements (1) in den Koextrusionskopf (6) eingespeist wird,
wobei der mit der Beschichtung (3) beschichtete Kunststoffkern (2) des Profilelements von dem Koextrusionskopf (6) zum System aus Kalibriermatrizen (7), das dem Koextrusionskopf (6) nachfolgt, extrudiert wird, wobei der Kern (2) des Profilelements (1) und die Beschichtung (3) zum Aushärten des Kunststoffs abgekühlt werden, und wobei die Außenabmessungen und die Gestalt des Profilelements (1) beim Durchlaufen des Systems aus Kalibriermatrizen (7) kalibriert werden,
wobei das Profilelement (1) von der Zieheinheit (9) durch das System aus Kalibriermatrizen (7) hindurchgezogen wird, und das Profilelement (1), das kontinuierlicher Extrusion ausgesetzt ist, in der Schneideinheit (10) auf bestimmte Längen geschnitten wird,
das Profilelement (1) von dem Koextrusionskopf (6) direkt in das System aus Kalibriermatrizen (7) gepresst wird,
wobei das Profilelement (1), das extrudiert wird, rasch abgekühlt wird, sodass der Kunststoff des Kerns (2) höchstens in den ersten beiden Kalibriermatrizen (7.1, 7.2) durch den von dem Extruder (4) auf den geschmolzenen Kunststoff des Kerns (2) ausgeübten Druck beaufschlagt wird, um die Beschichtung (3) des Profilelements (1) an die Innenoberfläche der Innenkammer der Kalibriermatrizen (7.1, 7.2) zu drücken, und
das Profilelement (1) durch die Zieheinheit (9) durch die folgenden Kalibriermatrizen (7.3... 7.n) des Systems aus Kalibriermatrizen (7) gezogen wird, und
gleichzeitig mit dem Durchlaufen der Kalibriermatrizen (7.3... 7.n) die Beschichtung (3) des Profilelements (1) an die Innenoberfläche der Innenkammer der Kalibriermatrizen (7.3...7.n) mit dem Gas, das durch die Reaktion des Treibmittels, das in dem Kunststoff des Kerns (2) enthalten ist, gedrückt wird,
**dadurch gekennzeichnet, dass** das Material der Beschichtung (3) HDPE ist, dem PET mit höherem Schmelzpunkt beigemischt ist.

2. Verfahren nach Anspruch 1, **dadurch gekennzeichnet, dass** der Kern (2) aus recyceltem Kunststoff gefertigt ist, der ein sortenreiner Kunststoff oder ein zusammengesetzter Mehrsortenkunststoff ist, wobei der Kunststoff jeweils einen oder mehrere der folgenden Kunststoffe umfasst, die LDPE, LLDPE, MDPE, HDPE, PP, PS,ABS oder ein anderer Kunststoff auf Polyolefinbasis oder deren Kombination ist.

3. Verfahren nach einem der vorstehenden Ansprüche, **dadurch gekennzeichnet, dass** der Kunststoff der Beschichtung (3) Brandhemmungsadditive, Flammschutzadditive, Farbstoffe, UV-stabilisierende Additive, Additive, welche die Haftung oder Oberflächenfestigkeit verbessern, oder deren Kombination umfasst.

4. Verfahren nach einem der vorstehenden Ansprüche, **dadurch gekennzeichnet, dass** die Innenoberfläche der Innenkammer der Kalibriermatrizen (7.1 ... 7.n), die der Gestalt des extrudierten Profils entspricht, mit einer Gleitbeschichtung beschichtet wird.

5. Verfahren nach einem der vorstehenden Ansprüche, **dadurch gekennzeichnet, dass** zwei oder mehr zweite Extruder (5) zum Bereitstellen von zwei oder mehr unterschiedlichen Farben der Beschichtung (3) auf verschiedenen Seiten des Profilelements (1) oder zum Beschichten mit unterschiedlichen Kunststoffarten verwendet werden.

6. Verfahren nach einem der vorstehenden Ansprüche, **dadurch gekennzeichnet, dass** das Profilelement (1) nach dem Kalibrierdüsensystem (7) zum Nachkühlen durch mindestens ein Kühlbad (8) gespeist wird.

7. Verfahren nach einem der vorstehenden Ansprüche, **dadurch gekennzeichnet, dass** vor der Zieheinheit (9) mit einer Musterpresseinheit (11) ein Muster auf dem Profilelement (1) geschaffen wird, das Profilelement (1) gebürstet wird oder beides.

8. Verfahren nach einem der vorstehenden Ansprüche 1 bis 5, **dadurch gekennzeichnet, dass** mit einer Musterpresseinheit (11) zwischen zwei Kalibriermatrizen ein Muster auf dem Profilelement geschaffen wird.

## Revendications

1. Procédé de coextrusion d'un élément profilé (1), dans lequel un noyau (2) de l'élément profilé (1) est composé d'un plastique recyclé et le noyau (2) de l'élément profilé (1) présente un revêtement en plastique (3),
dans lequel l'élément profilé (1) est extrudé dans une ligne de coextrusion comprenant :
une extrudeuse principale (5) pour extruder le noyau (2) de l'élément profilé (1),
au moins une seconde extrudeuse (5) pour extruder le revêtement (3) du noyau (2) de l'élément profilé (1),
une tête de coextrusion (6) comprenant un noyau (2), une zone d'égalisation de plastique (13), une zone d'application de revêtement (14) sur le noyau (2), une zone de formation initiale de la forme de profilé (15) de l'élément profilé (1) et une zone de mise sous pression (16) du noyau (2) de l'élément profilé (1),
un système de matrices d'étalonnage (7) comprenant des matrices d'étalonnage (7.1...7.n) suivant la tête de coextrusion (6) pour stabiliser la forme et les dimensions de l'élément profilé (1) et refroidir l'élément profilé (1),
une unité de traction (9) de l'élément profilé (1) et une unité de découpe (10) de l'élément profilé (1),
dans lequel le procédé comprend des étapes dans lesquelles :
du plastique recyclé à l'état fondu est introduit depuis l'extrudeuse principale (4) dans la tête de coextrusion (6) pour former le noyau (2) de l'élément profilé (1), et du plastique du revêtement (3) à l'état fondu est introduit depuis au moins une seconde extrudeuse (5) dans la tête de coextrusion (6) pour former un revêtement (3) sur le noyau (2) de l'élément profilé (1),
dans lequel le noyau en plastique (2) de l'élément profilé revêtu du revêtement (3) est extrudé de la tête de coextrusion (6) vers le système de matrices d'étalonnage (7) en suivant la tête de coextrusion (6), dans lequel le noyau (2) de l'élément profilé (1) et le revêtement (3) sont refroidis pour durcir le plastique et dans lequel les dimensions externes et la forme de l'élément profilé (1) sont étalonnées lors d'un passage à travers le système de matrices d'étalonnage (7),
dans lequel l'élément profilé (1) est tiré par l'unité de traction (9) à travers le système de matrices d'étalonnage (7) et, dans l'unité de découpe (10), l'élément profilé (1) soumis à une extrusion continue est découpé à des longueurs spécifiées,
l'élément profilé (1) est pressé depuis la tête de coextrusion (6) directement dans le système de matrices d'étalonnage (7),
dans lequel l'élément profilé (1) qui est extrudé, est refroidi rapidement de telle sorte qu'au plus, dans les deux premières matrices d'étalonnage (7.1, 7.2), le plastique du noyau (2) soit mis sous pression par la pression exercée par l'extrudeuse (4) sur le plastique fondu du noyau (2), afin de presser le revêtement (3) de l'élément profilé (1) contre la surface interne de la chambre interne desdites matrices d'étalonnage (7.1, 7.2), et
l'élément profilé (1) est tiré à travers les matrices d'étalonnage suivantes (7.3 ... 7.n) du système de matrices d'étalonnage (7) par l'unité de traction (9), et
en même temps que le passage à travers les matrices d'étalonnage (7.3...7.n), le revêtement (3) de l'élément profilé (1) est pressé contre la surface interne de la chambre interne des matrices d'étalonnage (7.3...7.n) avec le gaz généré par la réaction de l'agent d'expansion contenu dans le plastique du noyau (2),
**caractérisé en ce que** le matériau du revêtement (3) est du HDPE, dans lequel du PET à point de fusion plus élevé a été mélangé.

2. Procédé selon la revendication 1, **caractérisé en ce que** le noyau (2) est composé de plastique recyclé, qui est un plastique monotype ou un plastique composite multitype, dans lequel ledit plastique comprend respectivement un ou plusieurs des plastiques suivants, qui sont le LDPE, le LLDPE, le MDPE, le HDPE, le PP, le PS, l'ABS, ou tout autre plastique à base de polyoléfine, ou leur combinaison.

3. Procédé selon l'une quelconque des revendications précédentes, **caractérisé en ce que** le plastique du revêtement (3) comprend des additifs résistants au feu, des additifs anti-inflammabilité, un colorant, des additifs de stabilisation d'UV, des additifs améliorant l'adhérence ou la résistance de surface, ou leur combinaison.

4. Procédé selon l'une quelconque des revendications précédentes, **caractérisé en ce que** la surface interne de la chambre interne des matrices d'étalonnage (7.1 ... 7.n) correspondant à la forme du profilé extrudé est revêtue d'un revêtement antifriction.

5. Procédé selon l'une quelconque des revendications précédentes, **caractérisé en ce que** deux, ou plus, secondes extrudeuses (5) sont utilisées pour fournir deux, ou plus, couleurs différentes au revêtement (3) sur différents côtés de l'élément profilé (1) ou pour application en revêtement avec différents types de plastique.

6. Procédé selon l'une quelconque des revendications précédentes, **caractérisé en ce que,** après le système de matrices d'étalonnage (7), l'élément profilé (1) est introduit dans au moins un bain de refroidissement (8) pour un post-refroidissement.

7. Procédé selon l'une quelconque des revendications précédentes, **caractérisé en ce que,** avant l'unité de traction (9), un motif est créé sur l'élément profilé (1) avec une unité de pressage de motif (11), l'élément profilé (1) est brossé, ou les deux.

8. Procédé selon l'une quelconque des revendications précédentes 1 à 5, **caractérisé en ce qu'un** motif est créé sur l'élément profilé avec une unité de pressage de motif (11) entre deux matrices d'étalonnage.
